# EUROPEAN PATENT APPLICATION

(11) **EP 4 403 768 A1**
(43) Date of publication of application: **24.07.2024**
(21) Application number: 24460003.7
(22) Date of filing: 05.01.2024
(51) Int. Cl.: F03D 3/02, F03D 3/04, F03D 9/25

(54) **WIND POWER PLANT WITH A TWO-ROTOR POWER GENERATOR**

(30) Priority: 18.01.2023 PL 44352923
(71) Applicant: Tadeusz, Bielarski, 42-216 Czestochowa (PL)
(72) Inventor: Tadeusz, Bielarski, 42-216 Czestochowa (PL)

(57) **Abstract**

The wind power plant with two-rotor voltage generator is characterised by the introduction of a rotating screen into its construction to allow the generator to operate with two counter-rotating rotors. ( rotating in opposite directions the voltage generator and the magnet wheel ). The magnetic field of the magnetiser (magnet wheel) and the winding of the voltage generator pass each other twice as fast as in a generator with a stator, converting the kinetic energy of the wind into electrical energy. Therefore, the power plant presented here achieves better efficiency and the kilowatt of electricity it produces is cheaper than elsewhere. The wind power plant with a two-rotor EMF generator is an emission-free source of electricity and contributes to the reduction of pollution in the Earth's atmosphere.

## Description

An invention in the field of electrical engineering.

The invention relates to a method of generating electricity. The power plant is intended for households, onshore and offshore wind farms. The wind power plant with a two-rotor power generator belongs to renewable energy sources, i.e. emission free power generation equipment. It is primarily a representative of vertical-axis wind turbines, but can also be operated horizontally. After appropriate adaptation, i.e. sealing of the electrical instalation, our rotary shielded power plant can succesfully operate in a horizontal possition submerged in a river current and is a represntative of hydroelectric power plant.

In wind turbines known from the state of the art, electric current is generated in the stator windings by the rotation a magnetiser (magnetic wheel) around them. It is also known when the winding of the voltage generator spins around the stationary electromagnets of the static magnetiser. In the generator of our wind power plant, the magnetic wheel and the voltage generator rotate simultaneously in opposite directions. This is a fundamental feature that distinguishes our wind power plant from others. There is no stator in our power generator. In our generator, both rotors are mounted on a common axis of rotation and rotate in opposite directions. The two-rotor EMF generator is characterised by the fact that converts kinetic energy ( which is the reason for its operations ) into electrical energy twice as fast as a single-rotor EMF generator of the same size. Therefore, it increases the efficiency per unit of time and significantly improves the power plant's production capacity compared to power plants of the same size. The increase in the production capacity, i.e. the efficiency of the power plant, results directly from the formula for the electromotive force EMF; **ε** = **φ** : **t** ( **φ** is a magnetic stream of magnetiser acting on the winding of the voltage generator and **t** is the time of this action ). The voltage generator, which is the second rotor in our generator, rotates in the opposite direction to the magnetic wheel, and shortens this time **t** by half. Putting **½ t** into the formula **ε** = **φ** : **½ t** we have **ε** = **2 φ** : **t.** As we can see in the formula for the EMF in a wind power plant with a generator with two rotors, its doubles per unit of time compared to a power plant with one rotor and stator. The time of counteracting the generation of electric voltage in the power generator has been reduced twice because its winding rotates in the opposite direction to the rotation of magnetic field of the magnet wheel. This is probably an innovative way of obtaining electric current when it comes to wind power plant and river turbines. Electricity from the voltage generator is discharged via cables down along the drive wing to a rotating through -hole electrical connector. And from there, through the middle of the pipe, which is a stationary vertical axis of rotation firmly fixed in the ground, out to the electrical receiving network.

Therefore, in order to better use the power of the wind, we must receive its kinetic energy faster and convert it into electricity quicker. To achive this, the magnetiser ( magnet wheel) always rotates in the opposite direction to the rotating voltage generator. For this purpose, the wind drive, which is the simplest wings known in many other solutions, has been divided into two equal parts, upper and lower. Both parts are mounted on a vertical axis of rotation, which is a steel pipe, and rotate independently of each other. Doubling the power obtained in the wind turbine presented here is possible by dividing the unidirectional wind stream into two parts. And although both of these streams blow in the same direction, they will always give the opposite direction of rotation of the rotors in our generator. The movement of the rotors in opposite directions, driven by unidirectional wind is enabled by a rotating shield (screen). It is equipped with a rudder that is always parallel to the wind direction. Windows in the shield (screen) divide the pressing wind into two streams. Cut out in the screen on the opposite side of its rotation axis, they open the opposite drive wings of the magnet wheel and the voltage generator to the wind. The force of the wind acting on their wings will always push them in opposite directions. The windows in the screen are shifted vertically so that there is space between them. And there, protected from wind by the screen, the magnetic wheel and the voltage generator rotate in opposite direction. In our case shown in the drawings, the magnet wheel (magnetiser) is attached to the upper drive and is one rotor of generator, and the voltage generator is attached to the lower drive and is the second rotor of the generator. The magnet wheel rotates according to the movement of the clockwise, because the wind force works on its left side of the rotation axis. The voltage generator rotates against the movement of clockwise because the wind force works on the wings of its drive on the right side of its rotation axis. The windows in the rotating screen are opened and closed with shutters. The shutters are moveable and powered by stepper motors. The shutters close to protect the drive wings against too strong winds and open to maintain the rotor speed at an acceptable level. It this way, they protect the drive and the entire wind power plant against destruction. The stepper motors are powered by a small portion of the energy from our rotary voltage generator. It is transmitted using electric wires. They are placed inside the pipe, which is our vertical axis of rotation. On sunny days, energy to power electrical devices is generated in flexible photovoltaic panels placed on the surface of the rotating screen. The amount of electricity produced in a wind power plant depends on the linear speed of the wind and the method of converting its kinetic into electricity. In our two-rotor generator this method has been improved significantly. In addition to dividing the wind into two streams, the rotary shield has additional function. It protects half of those rotor drive wings from the wind that are not working at any given time in favour of the propulsive efficiency of the power generator. The rotating screen with windows completely eliminates the braking wind acting on the opposite side of the rotation axis of our generator drive. Therefore, it contributes to increasing the speed at which the magnetic fields of the magnet and the voltage generator in our two-rotor generator pass each other. And this reduces the time for their opposing magnetic fluxes to interact with each other and increases the power produced. Therefore, the benefits of the method of obtaining electricity described above are that we receive at least twice as much energy compared to currently operating vertical axis wind power plant. This innovative method of generating electricity enables cheaper construction of wind farms with the power assumed at the beginning. This clearly qualifies our power plant with a two-rotor power generator and a rotating screen to compete with other power plants in industrial applications.

Successfully,our turbine with a two-rotor power generator can operate as a river power plant. In the horizontal aligment of the axis of rotation, it delivers more energy than generator of the same size with a stator and rotor.

In our wind and hydroelectric power plant with a two-rotor voltage generator, we produce a cheaper kilowatt of renewable energy and thus delay global warming on Earth.

### The subject of the invention is shown in the drawings:

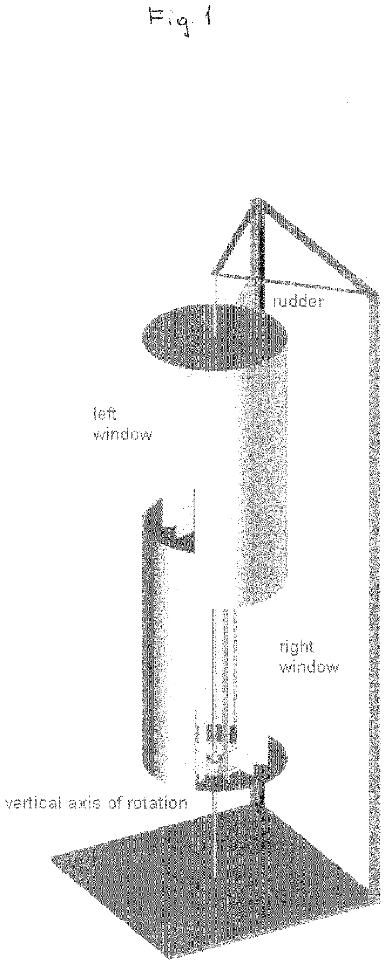

- Fig.1: - Wind power plant with a two-rotor generator and a rotating screen with a rudder.

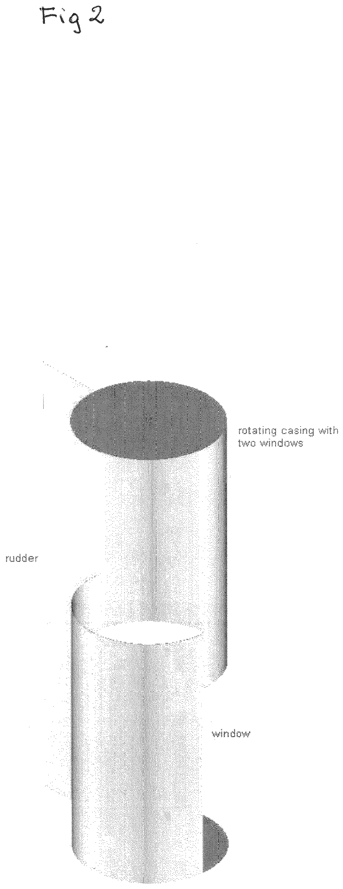

- Fig.2: - Rotating screen with two windows and a rudder.

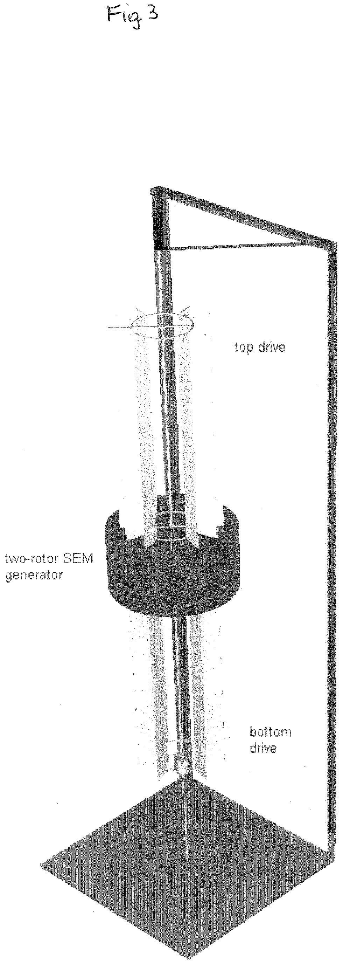

- Fig.3: - Wind power plant without rotating screen.

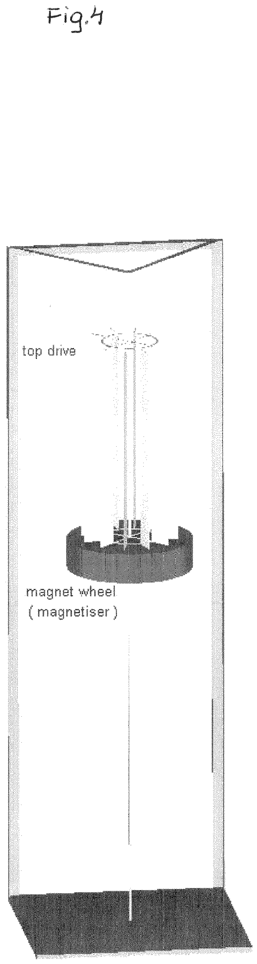

- Fig.4: - Top drive with magnet wheel, (rotating to the right under the pressure of the wind).

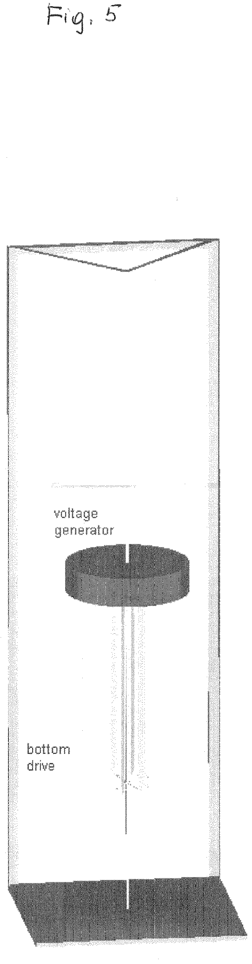

- Fig.5: - Lower drive with voltage generator. (rotating to the left under the pressure of the wind).

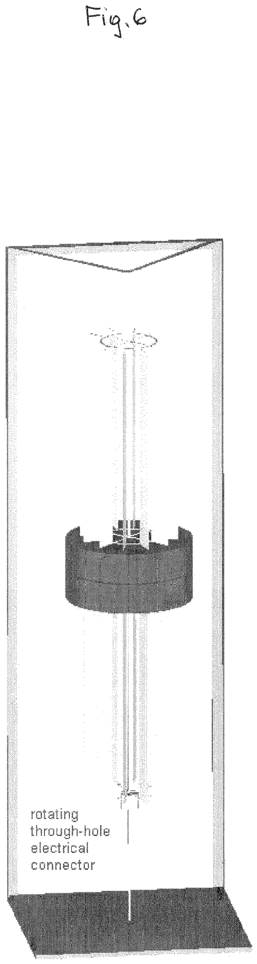

- Fig.6: - Rotating through-hole electrical connector and its location in the lower drive.

## Claims

1. **Two-rotor EMF generator.**
It stands out in that it converts kinetic energy, which is the reason for its operations, into electrical energy twice as fast as a generator with stator and one rotor. The use of a two-rotor generator results in a significant increase in the power plant's efficiency and better use of the wind's linear speed. A two-rotor power generator is used in a wind power turbine with a vertical axis of rotation. This generator consists of two rotors independently rotating in opposite directions. The first is a magnetiser (magnet wheel) made of neodymium magnets or electromagnets as in other such generators. It is a metal ring with an even number of magnets. In the centre of the ring there is a bearing for placing it on the vertical axis of rotation. This magnetic wheel is attached by screws from below to the top drive of the wind turbine. In order to strengthen and protect it from the weather, the ring is flooded with epoxy resin. The second rotor is an electrical voltage generator made of iron sheets in the form of a ring topped with a yoke and attached from above to the lower drive of the wind turbine. As in other voltage generators known by us, a cooper winding (preferably three-phase) is arranged in the grooves of the ring to generate electrical voltage. In the centre of the rotor there is a bearing for placing it on vertical axis of rotation. In order to protect it from the weather, the whole area is flooded with epoxy resin. In other words, the two-rotor EMF generator presented here, as in most wind-power generators, consists of magnetiser (magnetic wheel) and a voltage generator. But **in our generator, the voltage generator has its own wind drive, separate and independent from the magnetic wheel wind drive.** Structurally, both drives are identical. Mechanically and electrically, both rotors become a voltage generator after they are mounted on a common axis of rotation. It is very important that the air gap between the magnets of the magnetic wheel and the sides of the voltage generator winding coils is as small as possible ( 0,5 to 1,0 mm ). On this axis, each rotor, i.e. a magnetic wheel with its own wind drive and a voltage generator with its own wind drive, can rotate freely in its own direction. They start their proper work ( rotating in opposite direction ), after installing a rotating casing with two windows and rudder on their common vertical axis of rotation. Regardless of which direction the wind is blowing, passing through the windows in a rotating screen will always give them opposite directions of rotation. In our case shown in the drawings, the wind will push the magnetic wheel to the right, and the voltage generator will rotate to the left under the influence of the wind. Because EMF is created only under the influence of a moving magnetic field, the faster the movement, the greater it is. The rotational speed of the rotor has a direct impact on the EMF generation time. This is the time during which the magnetic field of the magnet wheel passes through the winding of the power generator. In generators in which the voltage generator winding is stationary, the time of EMF generation results from the linear speed of the wind pressing on the magnetic wheel drive. In our generator, the wind causes the winding of the voltage generator to rotate in the opposite direction of the magnetic wheel, shortening this time and thus increasing the amount of power produced. We can also make more efficient use of the river's linear speed by using our two-rotor generator. To do this, we anchor our turbine horizontally and perpendicularly in the middle current of the river. The rudder of the screen will be positioned behind the turbine as seen from the incoming water side. Running water flowing through the windows will push the rotors. One above and the other below the horizontal axis of rotation will rotate in opposite direction. The generation time of EMF is halved in this case, thus making more efficient use of the river's current velocity. Thus, we will obtain a more efficient type of hydroelectric power station and confirm the industrial utility of the two-rotor power generator.

2. **Rotating shield with windows and rudder.**
The rotating shield with windows and rudder is the most important element of a wind power plant with a two-rotor EMF generator. It divides the unidirectional wind blowing towards the power plant into two equal parts. Both of these air streams, although they themselves have one and the same air direction, push their rotor drive and give them opposite directions of rotation. This makes our power plant more efficient, compared to a power plant of the same size but with a generator with one rotor and stator. The rotating shield ( screen ) is made of a stainless steel sheet, the width of which corresponds to the height of the two wind turbine drives plus the height of the two-rotor generator. The length of the sheet is **2πr,** where **r** is the radius of the ring which forms the generator drive plus the minimum distance for the gap between the screen and the rotating wings of the drives. To this length we add the width of the rudder. We roll the sheet of steel measured in this way into a cylinder and bend the section for the rudder perpendicularly to the tangent to its surface. At the top, the cylinder has a roof and a centrally mounted bearing in it, so that when placed on the vertical axis of rotation, it rotates freely in any direction under the influence of the wind. To prevent the rotating screen from being deformed during very strong winds, we connect its lower edge with a metal wheel that rotates freely at the bottom of the vertical axis of rotation. There are two identical, symmetrically opposite windows cut out in the screen and moved vertically so that when it is placed on the vertical axis of rotation, there is a two-rotor power generator between them. On the outer side of the screen, just above and below the windows, there are guides attached to it, where semicircular shutters made of sheet metal or other materials on small wheels shifft inside them. Shutters driven by stepper motors close and open windows depending on the wind strength. In the event of a storm, they close the windows completely to protect the power plant from damage. Control signals are sent to the stepper motors from wind speed sensors mounted on the roof of the rotating screen. The stepper motors draw energy from batteries located on the roof of the rotating screen, right next to the wind speed sensors. At night and cloudy days, the batteries draw energy from two-rotor power generator. On sunny days, the batteries are charged using flexible photovoltaic panels attached to the side surfaces of the rotating screen. The windows in the rotating screen are cut in such a way that they simultaneously open the rotor drives on opposite sides of the vertical axis of rotation to the wind. In our case shown in the figures, through the upper window on the left side of the rotation axis, the wind pushes the magnet wheel to the right. The lower window on the right side of the rotation axis allows the power generator to rotate , but only in the opposite left direction. The wind operating in this way releases its kinetic energy faster to the generator, which, by achieving better efficiency, results in reducing the cost of electricity production. The use of a rotating screen with windows and a rudder in a horizontal arrangement is also innovative. Together with a horizontally anchored rotation axis in the river and two counter-rotating power generator rotors on it, it is a more efficient type of mini hydroelectric power plant. The axis of rotation is anchored with two chains on its sides perpendicularly to the river current.The length of the chains allows it to float in the middle of the current. The rudder of the rotating screen is aligned with the direction of the river current behind the axis of rotation when viewed from the side of the flowing water. The river flowing through the upper and lower windows turns the generator rotors in opposite directions. We receive more and cheaper electricity and therefore our hydro turbine can compete in the global renewable energy market.
